# EUROPEAN PATENT SPECIFICATION

(11) **EP 1 099 588 B1**
(45) Date of publication and mention of the grant of the patent: **21.12.2005**
(21) Application number: 00203740.6
(22) Date of filing: 27.10.2000
(51) Int. Cl.: B60K 26/02

(54) **Device for manually controlling the acceleration system of an agricultural vehicle**
Vorrichtung zur manuellen Steuerung des Beschleunigungssystems in einem landwirtschaftlichen Fahrzeug
Dispositifs pour le contrôle manuel de système d'accélération d'un véhicule agricole

(30) Priority: 09.11.1999 IT BO990608
(43) Date of publication of application: 16.05.2001
(73) Proprietor: CNH Italia S.p.A., 41100 Modena (IT)
(72) Inventor: Fava, Gianluca, 41100 Modena (IT); Sola, Giancarlo, 41100 Modena (IT)
(74) Representative: Vandenbroucke, Alberic

(56) References cited:
- EP-A- 0 623 760
- CH-A- 113 606
- DE-C- 410 654
- GB-A- 209 568
- GB-A- 1 149 820
- US-A- 1 959 881
- US-A- 5 467 663

## Description

The present invention relates to a device for manually controlling the acceleration system of a vehicle, such as an agricultural tractor or industrial machine.

As known in the art, e.g. in US-A-5.467.663, the acceleration system of a vehicle (for increasing vehicle speed) can be controlled by means of a pedal (accelerator pedal) normally located on the floor of the operator's station, or by means of a hand-operated lever (accelerator lever) commonly fitted to a fender above one of the rear wheels of the machine. In another embodiment, the accelerator pedal and lever normally are operatively connected by a mechanism enabling indifferent pedal or lever control of the acceleration system, as such defining a timing device between the pedal and lever. This operative connection comprises a second lever linked to the acceleration system through a first tie and directly acted upon by the accelerator pedal. A second tie is extended between the accelerator lever and a third lever and is maintained in a tensioned condition by spring means. The third lever is coupled to the second lever in such a manner that rotation of the third lever always provokes rotation of the second lever and hence actuation of the acceleration system.

The fender supporting the accelerator lever may vary in shape from one vehicle to another and also the exact location of the lever relative to the fender may be different from one embodiment to another. As a consequence, the second tie inbetween the accelerator lever and the third lever located near the accelerator pedal does not have a predetermined length equal for all machines. As a result, in prior art arrangements, second ties with different lengths must be available which are adapted to keep the operation of the accelerator pedal and the accelerator lever in phase with each other. For the same reason, if the vehicle operator wishes to change the location of the accelerator lever on the fender for placing it in a more suitable ergonomic position, adapted to his needs, the distance between the accelerator lever and the third lever must be measured accurately to keep the second tie taut, and a new second tie of the right length must be installed.

EP-A-0.623.760, according to which the preamble of claim 1 has been delimited, proposes an automatic adjustment system for a cable guided in a sheath and connected between an accelerator pedal and an accelerator mechanism on an engine. Knowing that the effective length of the cable anyhow is reduced due to bending of the sheath, EP-A-0.623.760 proposes to provide a cable which is too short from the outset. To compensate for this lack of cable, the automatic adjustment system allows the attachment point of the cable to move somewhat closer towards the accelerator system on the engine. Although this system allows a cable length adjustment of limited degree, it does not permit the accelerator pedal to be installed at a different distance from the accelerator mechanism on the engine without having to provide a cable of a different length.

It is therefore an object of the present invention to provide a device for manually controlling the acceleration system of a vehicle, designed to eliminate the aforementioned drawbacks, i.e. which may be installed, with no alterations to the component parts, on vehicles with different distances between said two levers or between the accelerator lever and the accelerator pedal.

According to the present invention, there is provided a device for controlling a control system of a vehicle from a distance comprising :
- a first lever hingeably attached to a fixed part of an operator's station on the vehicle;
- a second lever operatively connected to the control system and hingeably attached to a further fixed part of the operator's station; the first and second levers being located at a given operative distance from each other; and
- first flexible tie means connecting said first lever to said second lever.
   The device is characterized in that :
- the length of said first flexible tie means is larger than the effective length needed to connect said first lever to said second lever; and
- said device further comprises a member for adjusting the length of said first flexible tie means to match said given operative distance; said member being associated with at least one of said first or second levers and comprising a pulley having a seat for housing an end pin of said first flexible tie means, and an annular groove for housing the portion of said first tie means which is larger than said effective length needed; said pulley being rotatable about its own central axis of rotation to wind said portion inside said groove until said first flexible tie means is taut.

The device is particularly applicable to an acceleration system of a vehicle in which the manually operated acceleration lever may be installed on a fender of the operator's platform at a variable distance from the acceleration pedal.

A preferred, non-limiting embodiment of the present invention will be described by way of example with reference to the accompanying drawings, in which:
Figure 1 shows a side view of the device according to the teachings of the present invention;
Figure 2 shows an exploded view in perspective of a part of the Figure 1 device; and
Figure 3 shows a side view, taken in the direction of arrow V, of a portion of the Figure 1 device.

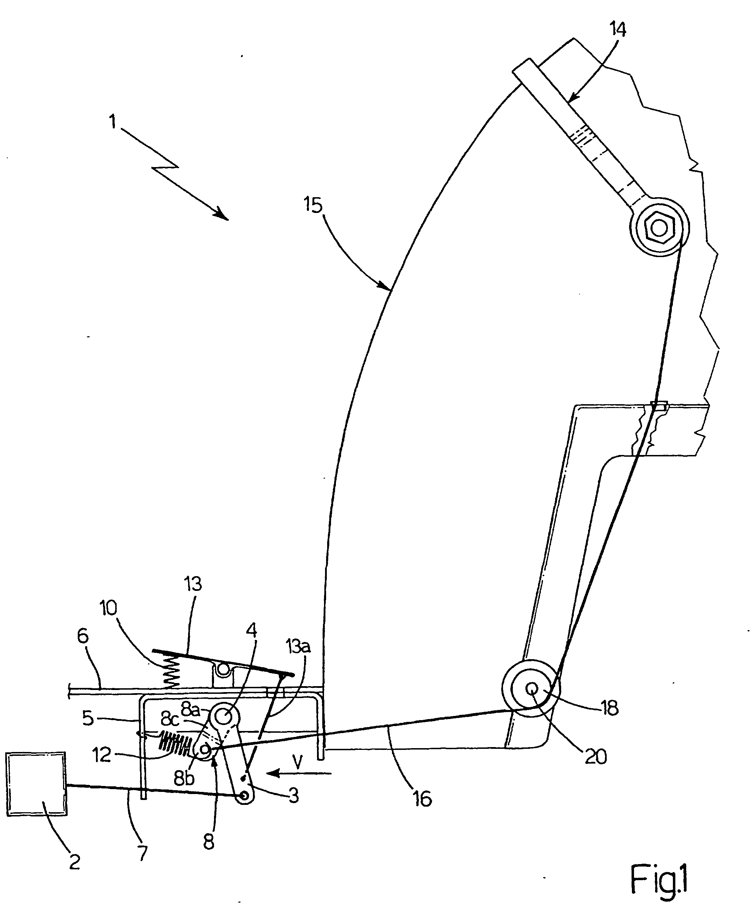

Reference number 1 in Figure 1 indicates as a whole a device for controlling an acceleration system 2 (known and therefore shown only schematically) of an agricultural machine, in particular a known tractor, shown only partly.

Device 1 comprises a flat lever 3 hinged at a first end to a pin 4 fitted integrally to a bracket 5 in turn attached integrally to an operator's platform 6 of the agricultural machine. A first tie 7, formed by a wire or a rod, connects a second end of the lever 3 to the acceleration system 2. A lever 8 is hinged at a first end to pin 4 and is provided with a spring 12 fitted between a second end of lever 8 and the bracket 5. Above the platform 6, a pedal 13 is provided, which, when pressed downwardly thereby counteracting the force of a spring 10, rotates lever 3 anticlockwise (with reference to Figure 1) by means of a tie 13a.

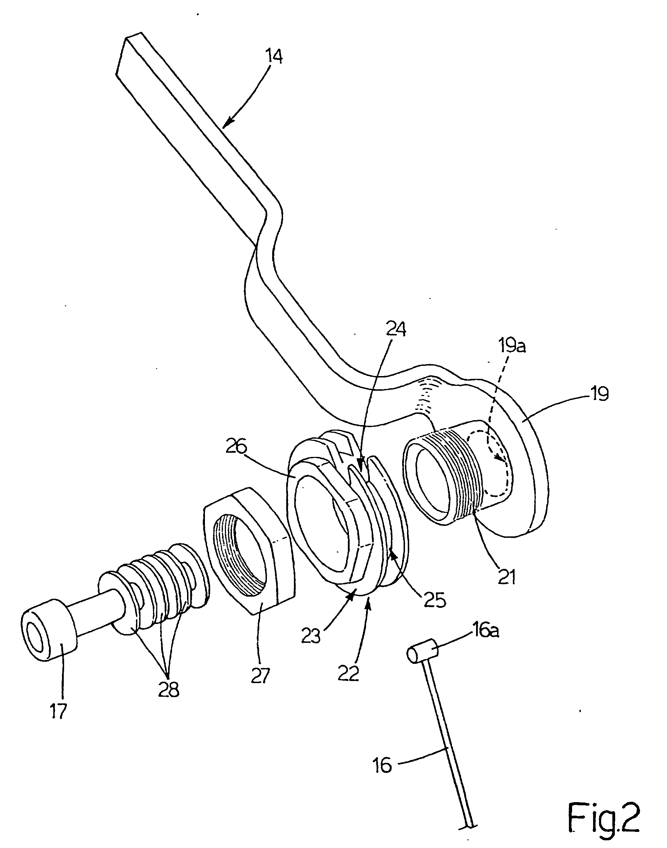

A lever 14, known as the acceleration lever, is fitted to a fender 15 of the agricultural machine and is actuated manually to control acceleration system 2. A second tie 16 is connected between the acceleration lever 14 and said lever 8 whereby the acceleration lever 14 is operable to rotate lever 8 in the anti-clockwise direction (with reference to Figure 1) about pin 4 in opposition to the action of spring 12, by the same amount by which lever 14 is rotated manually about a screw 17 (Figure 2) which secures lever 14 to fender 15. A guide member 18 is fitted to fender 15 intermediate the acceleration lever 14 and the lever 8 for guiding tie 16 in a suitable manner. Said member 18 is defined by a pulley rotating about a screw 20 securing the pulley to the fender 15.

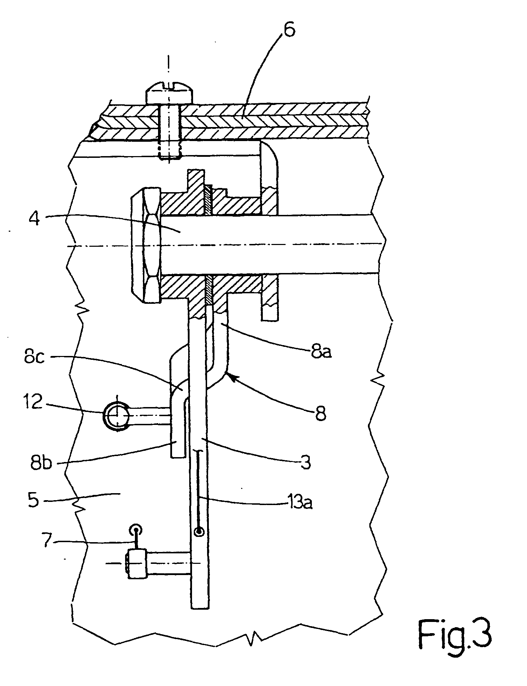

With reference to Figures 1 and 3, lever 8 comprises a portion 8a located in a plane parallel to that of lever 3 and facing a first surface of lever 3. Lever 8 further comprises a portion 8b again located in a plane parallel to that of lever 3 but facing a second surface thereof, which is at the opposite side of the first surface. A central portion 8c connects portions 8a and 8b and is therefore defined in a plane inclined with respect to those of portions 8a and 8b. In actual use, the downward pressure on pedal 13 only rotates lever 3 anticlockwise, without influencing the position of lever 8. Conversely, anticlockwise rotation of acceleration lever 14 not only rotates lever 8 anticlockwise, but also rotates lever 3 in the same direction through intermediary of the central portion 8c abutting lever 3.

With reference to Figure 2, lever 14 comprises a substantially circular first end 19 having a drilling or aperture 19a running therethrough. The drilling 19a is coaxial with a hollow, externally threaded bush 21 extending from one face of end 19. The lever 14 further comprises a member 22 for adjusting the length of the tie 16. In the embodiment shown, the member 22 comprises a pulley-like adjuster 23 made of plastic material and having a seat 24 for housing an end pin 16a of the tie 16. An annular groove 25 in the adjuster 23 is able to receive and house a portion of the tie 16 when the total length of the tie 16 should be adjusted, i.e. when the length of the tie 16 is larger than the effective length needed to connect pulley 23 to the second end of lever 8.

With further reference to Figure 2, pulley 23 is seated on bush 21, and comprises, on the distal end relative to lever 14, an annular element 26 having a square outer profile permitting adjustment of the angular position of pulley 23 about the axis of bush 21 by means of a tool (not shown). As such, the length of the portion of the tie 16 wound inside groove 25 can be controlled. Pulley 23 is locked relative to bush 21, and hence relative to the acceleration lever 14, by a nut 27, which is screwed onto bush 21 so that pulley 23 is pressed against end 19 of lever 14 and is thereby made angularly integral with lever 14. Screw 17, as already mentioned, fastens the lever 14 to the fender 15, and is provided with Belleville washers 28, which press against a seat (not shown) inside aperture 19a to provide the appropriate amount of friction between the lever 14 and the fender 15 when lever 14 is rotated manually.

In actual use, after fitting the lever assemblies 3 and 8 to the bracket 5, and guide member 18 and lever 14 to the fender 15, a first end of the tie 16 is fitted to the second end of lever 8. The tie 16 is guided over guide member 18 and the second end (pin 16a) of the tie 16 is fitted inside seat 24 of pulley 23. Pulley 23 is then fitted onto bush 21 and, by intermediary of a tool, is rotated about its own central axis of rotation to wind part of the tie 16 inside groove 25 until the tie 16 is taut. Finally, keeping pulley 23 in the required angular position, pulley 23 and lever 14 are made angularly integral by means of nut 27.

The advantages of the present invention will be apparent from the foregoing description. In particular, the invention provides for a manual acceleration control device which can be installed, with no alterations to its component parts, at different locations on an operator's station, thus providing for advantages in terms of both manufacture and storage of the device itself, and installation of the device on the machine.

Moreover, the device according to the present invention also greatly simplifies the timing between the hand and pedal accelerators.

## Claims

1. A device (1) for controlling a control system (2) of a vehicle from a distance comprising :
- a first lever (14) hingeably attached to a fixed part of an operator's station (6) on the vehicle;
- a second lever (8) operatively connected to the control system (2) and hingeably attached to a further fixed part of the operator's station (6); the first and second levers (14, 8) being located at a given operative distance from each other; and
- first flexible tie means (16) connecting said first lever (14) to said second lever (8); and
**characterized in that** :
- the length of said first flexible tie means (16) is larger than the effective length needed to connect said first lever (14) to said second lever (8); and
- said device (1) further comprises a member (22) for adjusting the length of said first flexible tie means (16) to match said given operative distance; said member (22) being associated with at least one of said first or second levers (14, 8) and comprising a pulley (23) having a seat (24) for housing an end pin (16a) of said first flexible tie means (16), and an annular groove (25) for housing the portion of said first tie means (16) which is larger than said effective length needed; said pulley being rotatable about its own central axis of rotation to wind said portion inside said groove (25) until said first flexible tie means (16) is taut.

2. A device according to claim 1, **characterized in that** the control system (2) is an acceleration device and the first lever (14) is an acceleration lever which is manually operated.

3. A device according to claim 1 or 2, **characterized in that** said pulley (23) is made of plastic material.

4. A device according to any of the preceding claims, **characterized in that** at least one of said first or second levers (14, 8) comprises a first end (19), from one face of which extends a hollow, externally threaded bush (21); said pulley (23) being fitted to said bush (21) and being made angularly integral with said at least one lever (14, 8) by a nut (27) screwed onto said bush (21).

5. A device according to claim 4, **characterized in that** said pulley (23) comprises an annular element (26) having an outer profile contoured to permit adjustment of the angular position of said pulley (23 about the axis of said bush (21) by means of a tool engaging said element (26), thereby changing the length of the portion of said first tie (16) wound inside said groove (25).

6. A device according to any of the preceding claims, **characterized in that** a screw (17) is provided for attaching said first lever (14) to said fixed part of the operator's station (6); said fixed part being defined by a fender (15) of said vehicle and said screw (17) supporting spring means (28) for pressing said first lever (14) against said fender (15) to obtain an appropriate friction when said first lever (14) is rotated manually.

7. A device according to any of the preceding claims **characterized in that** it further comprises :
- a third lever (3) hingeably supported by a hinge pin (4) also carrying the second lever (8) ;
- second tie means (7) connecting said third lever (3) to said control system (2);
- a pedal (13) for rotating said third lever (3) by means of said second tie means (7) thereby controlling said control system (2); said second and third levers (8, 3) being arranged such that rotation of the second lever (8) in one direction procures rotation of the third lever (3) in the same direction.

8. A device (1) according to claim 7, **characterized in that** said second lever (8) is rotated rearwardly out of phase with said third lever (3) as seen in said one direction and comprises an abutment (8c) for engaging said third lever (3) ensuring that rotation of said second lever (8) in said one direction produces simultaneous and equal rotation of said third lever (3).

## Patentansprüche

1. Vorrichtung (1) zur Steuerung eines Steuersystems (2) eines Fahrzeugs aus einer Entfernung, mit:
- einem ersten Hebel (14), der gelenkig an einem festen Teil einer Fahrerstation (6) auf dem Fahrzeug befestigt ist;
- einem zweiten Hebel (8), der betriebsmäßig mit dem Steuersystem (2) verbunden und gelenkig an einem weiteren festen Teil der Fahrerstation (6) angebracht ist; wobei die ersten und zweiten Hebel (14, 8) an einer vorgegebenen Betriebsentfemung voneinander angeordnet sind; und
- einer ersten flexiblen Verbindungseinrichtung (16), die den ersten Hebel (14) mit dem zweiten Hebel (8) verbindet; und
**dadurch gekennzeichnet, dass**:
- die Länge der ersten flexiblen Verbindungseinrichtung (16) größer als die effektive Länge ist, die erforderlich ist, um den ersten Hebel (14) mit dem zweiten Hebel (8) zu verbinden; und
- die Vorrichtung (1) weiterhin ein Element (22) zum Einstellung der Länge der ersten flexiblen Verbindungseinrichtung (16) zur Anpassung an die vorgegebene Betriebsentfemung umfasst; wobei das Element (22) zumindest einem der ersten oder zweiten Hebel (14, 8) zugeordnet ist und eine Seilscheibe (23) umfasst, die einen Sitz (24) für die Aufnahme eines Endstifts (16a) der ersten flexiblen Verbindungseinrichtung (16) und eine ringförmige Nut (25) zur Aufnahme des Teils der ersten Verbindungseinrichtung (16) aufweist, der größer als die effektive erforderliche Länge ist; wobei die Seilscheibe um ihre eigene, in der Mitte liegende, Drehachse drehbar ist, um den genannten Teil im Inneren der Nut (25) aufzuwickeln, bis die erste flexible Verbindungseinrichtung (16) straff ist.

2. Vorrichtung nach Anspruch 1, **dadurch gekennzeichnet, dass** das Steuersystem (2) eine Beschleunigungsvorrichtung ist und der erste Hebel (14) ein Beschleunigungshebel ist, der manuell betätigt wird.

3. Vorrichtung nach Anspruch 1 oder 2, **dadurch gekennzeichnet, dass** die Seilscheibe (23) aus Kunststoffmaterial hergestellt ist.

4. Vorrichtung nach einem der vorhergehenden Ansprüche, **dadurch gekennzeichnet, dass** zumindest einer der ersten oder zweiten Hebel (14, 8) ein erstes Ende (19) umfasst, von dessen einer Fläche aus sich eine hohle, mit Außengewinde versehene Hülse (21) erstreckt; wobei die Seilscheibe (23) an der Hülse (21) angebracht ist und in Winkelrichtung fest mit dem zumindest einen Hebel (14, 8) durch eine Mutter (27) vereinigt wird, die auf die Hülse (21) aufgeschraubt ist.

5. Vorrichtung nach Anspruch 4, **dadurch gekennzeichnet, dass** die Seilscheibe (23) ein ringförmiges Element (26) mit einem Außenprofil umfasst, das eine derartige Kontur aufweist, dass eine Einstellung der Winkelstellung der Seilscheibe (23) um die Achse der Hülse (21) mit Hilfe eines Werkzeugs ermöglicht wird, das mit dem Element (26) in Eingriff kommt, wodurch die Länge des Teils der ersten Verbindungseinrichtung (16) geändert wird, der im Inneren der Nut (25) aufgewickelt wird.

6. Vorrichtung nach einem der vorhergehenden Ansprüche, **dadurch gekennzeichnet, dass** eine Schraube (17) zum Anbringen des ersten Hebels (14) an dem ersten Teil der Fahrerstation (6) vorgesehen ist, dass der feste Teil durch einen Kotflügel (15) des Fahrzeugs gebildet ist, und dass die Schraube (17) Federeinrichtungen (28) zum Andrücken des ersten Hebels (14) gegen den Kotflügel (15) haltert, um eine geeignete Reibung zu erzielen, wenn der erste Hebel (14) von Hand gedreht wird.

7. Vorrichtung nach einem der vorhergehenden Ansprüche, **dadurch gekennzeichnet, dass** sie weiterhin folgendes umfasst:
- einen dritten Hebel (3), der gelenkig an einem Gelenkbolzen (4) gehaltert ist, der auch den zweiten Hebel (8) trägt;
- eine zweite Verbindungseinrichtung (7), die den dritten Hebel (3) mit dem Steuersystem (2) verbindet;
- ein Pedal (13) zum Drehen des dritten Hebels (3) mit Hilfe der zweiten Verbindungseinrichtung (7), wodurch das Steuersystem (2) gesteuert wird, wobei die zweiten und dritten Hebel (8, 3) so angeordnet sind, dass eine Drehung des zweiten Hebels (8) in einer Richtung eine Drehung des dritten Hebels (3) in der gleichen Richtung hervorruft.

8. Vorrichtung 1 nach Anspruch 7, **dadurch gekennzeichnet dass** der zweite Hebel (8) in Rückwärtsrichtung außer Phase mit dem dritten Hebel (3) bei Betrachtung in der genannten einen Richtung gedreht wird und einen Anschlag (8c) für den Eingriff mit dem dritten Hebel (3) umfasst, der sicherstellt, dass eine Drehung des zweiten Hebels (8) in der genannten einen Richtung eine gleichzeitige und gleiche Drehung des dritten Hebels (3) hervorruft.

## Revendications

1. Dispositif (1) pour le contrôle d'un système de contrôle (2) d'un véhicule à distance comprenant:
- un premier levier (14) fixé à articulation à une partie fixe d'un poste d'opérateur (6) sur le véhicule ;
- un deuxième levier (8) relié de manière fonctionnelle au système de contrôle (2) et fixé à articulation à une autre partie fixe du poste d'opérateur (6) ; le premier et le deuxième leviers (14, 8) étant disposés à une distance fonctionnelle donnée l'un de l'autre ; et
- des premiers moyens d'attache (16) flexibles reliant ledit premier levier (14) audit deuxième levier (8) ; et
**caractérisé en ce que** :
- la longueur desdits premiers moyens d'attache (16) flexibles est supérieure à la longueur effective nécessitée pour relier ledit premier levier (14) audit deuxième levier (8) ; et
- ledit levier (1) comprend également un élément (22) pour le réglage de la longueur dudit premier moyen d'attache flexible (16) afin de correspondre à ladite distance fonctionnelle ; ledit élément (22) étant associé à au moins l'un desdits premier ou deuxième leviers (14, 8) et comprenant une poulie (23) ayant un siège (24) pour le logement d'une broche d'extrémité (16a) dudit premier moyen d'attache flexible (16), et une rainure annulaire (25) pour le logement de la partie dudit premier moyen d'attache (16) qui est supérieur à ladite longueur effective nécessaire ; ladite poulie pouvant tourner autour de son propre axe de rotation central pour enrouler ladite partie à l'intérieur de ladite rainure (25) jusqu'à ce que ledit premier moyen d'attache flexible (16) soit tendu.

2. Dispositif selon la revendication 1, **caractérisé en ce que** le système de contrôle (2) est un dispositif d'accélération et le premier levier (14) est un levier d'accélération à actionnement manuel.

3. Dispositif selon la revendication 1 ou 2, **caractérisé en ce que** ladite poulie (23) est réalisée en plastique.

4. Dispositif selon l'une quelconque des revendications précédentes, **caractérisé en ce qu'**au moins l'un desdits premier ou deuxième leviers (14, 8) comprend une première extrémité (19) à partir d'une face duquel s'étend une bague creuse filetée sur l'extérieur (21) ; ladite poulie (23) étant montée sur ladite bague (21) et étant rendue angulairement intégrale avec au moins un levier (14, 8) par un écrou (27) vissé sur ladite bague (21).

5. Dispositif selon la revendication 4, **caractérisé en ce que** ladite poulie (23) comprend un élément annulaire (26) possédant un profilé extérieur au contour permettant le réglage de la position angulaire de ladite poulie (23) autour de l'axe de ladite bague (21) au moyen d'un outil engageant ledit élément (26), modifiant ainsi la longueur de la partie de ladite première attache (16) lovée à l'intérieur de ladite rainure (25).

6. Dispositif selon l'une quelconque des revendications précédentes, **caractérisé en ce qu'**une vis (17) est prévue pour la fixation dudit premier levier (14) à ladite partie fixe du poste d'opérateur (6) ; ladite partie fixe étant définie par un garde-boue (15) dudit véhicule et ladite vis (17) supportant des moyens à ressort (28) pour la compression dudit premier levier (14) contre ledit garde-boue (15) afin d'obtenir une friction appropriée lorsque ledit premier levier (14) est pivoté manuellement.

7. Dispositif selon l'une quelconque des revendications précédentes, **caractérisé en ce qu'**il comprend également :
- un troisième levier (3) supporté à articulation par une broche articulée (4) portant également le deuxième levier (8) ;
- des deuxièmes moyens d'attache (7) reliant ledit troisième levier (3) audit système de contrôle (2) ;
- une pédale (13) pour faire tourner ledit troisième levier (3) au moyen desdits deuxièmes moyens d'attache (7) contrôlant ainsi ledit système de contrôle (2) ; lesdits deuxième et troisième leviers (8, 3) étant disposés de manière telle que la rotation du deuxième levier (8) dans un sens procure la rotation du troisième levier (3) dans le même sens.

8. Dispositif selon la revendication 7, **caractérisé en ce que** ledit deuxième levier (8) est pivoté vers l'arrière étant déphasé par rapport audit troisième levier (3), vu dans ledit sens et comprend une butée (8c) pour engager ledit troisième levier (3) faisant en sorte que la rotation dudit deuxième levier (8) dans ledit sens entraîne une rotation simultanée et égale dudit troisième levier (3).
